# EUROPÄISCHE PATENTSCHRIFT

(11) **EP 1 026 038 B1**
(45) Veröffentlichungstag und Bekanntmachung des Hinweises auf die Patenterteilung: **29.09.2004**
(21) Anmeldenummer: 00100636.0
(22) Anmeldetag: 13.01.2000
(51) Int. Cl.: B60R 5/04, B60P 1/36, B60P 1/38, B60N 2/36

(54) **Personen- oder Kombikraftwagen mit Gepäck- oder Laderaum**
Passenger Vehicle or Van with space for Luggage or cargo
Véhicule pour passagers ou véhicule utilitaire avec compartiment de bagages ou de charge

(30) Priorität: 05.02.1999 DE 19904714
(43) Veröffentlichungstag der Anmeldung: 09.08.2000
(73) Patentinhaber: DaimlerChrysler AG, 70567 Stuttgart (DE)
(72) Erfinder: Baumert, Heinz, 71067 Sindelfingen (DE); Greiner, Ferdinand, 72218 Wildberg (DE); Wamhoff, Josef, 71154 Nufringen (DE)

(56) Entgegenhaltungen:
- EP-A- 0 776 837
- EP-A- 0 863 044
- DE-A- 3 930 626
- GB-A- 814 714
- US-A- 5 320 214

## Beschreibung

Die Erfindung betrifft einen Personen- oder Kombikraftwagen der im Oberbegriff des Patentanspruchs 1 angegebenen Gattung.

Bei einem Personen- oder Kombikraftwagen der eingangs genannten Art (DE 197 09 114 A1) ist das Endlosband über eine elektromotorisch angetriebene Frontwalze und eine Achterwalze geführt. Beide Walzen sind in einem Rahmen drehbar gelagert. Der Rahmen ist aus einer massiven Platte gebildet, die im Bereich der Front- und Achterwalze je eine Ausnehmung aufweist. Das etwa 2 mm dicke, aus Gummi bestehende Endlosband gleitet direkt auf der Oberseite der Platte und wird so durch diese abgestützt und läuft frei unterhalb der Platte, wobei eine an der Unterseite der Platte gehaltene Spannrolle das Endlosband stramm spannt.

Bei einem landwirtschaftlichen Mehrzweckfahrzeug (DD 69 269) mit einer Ladepritsche weist letztere einen selbttragenden, flachen Hohlkörper auf, der durch zwischen Ober- und Unterseite eingesetzte Rippen versteift ist und an seinem vorderen und hinteren Ende eingearbeitete Lagerstellen für eine Antriebswelle und eine Umlenkwelle sowie Aussparungen für auf den Wellen sitzenden, in Kratzketten eingreifenden Kettenrädern aufweist. Die beiden im Parallelabstand zueinander verlaufenden Kratzketten sind durch quer ausgerichtete Kratzleisten miteinander verbunden.

Bei einem bekannten Nutzfahrzeug (DE 34 13 528 A1) sind im Laderaumboden mehrere parallele Förderbänder mittels Ketten in Fahrzeuglängsrichtung angetrieben, wobei sich mit den Antriebsketten und den Förderbändern eine vertikale Trennwand bewegt. Dadurch kann das Ladegut an der rückwärtigen Beladungsöffnung, auf die Förderbänder aufgegeben und dann sukzessive mit der Trennwand nach vorn geschoben werden. Beim Entladen werden die Förderbänder invers angetrieben, so daß sich die Trennwand sukzessive in Richtung Beladungsöffnung bewegt und das Ladegut an der Beladungsöffnung von den Förderbändern abgenommen werden kann. Dadurch wird ingesamt die Be- und Entladung des Nutzfahrzeugs erleichtert und kann z.B. mittels eines Gabelstaplers durchgeführt werden. Die Förderbänder gleiten auf Seiten- und Innenrahmen. Das eine Ende der Förderbänder ist an der Unterseite der Trennwand angeschlossen, das andere Ende an einer Antriebskette, so daß das Förderband ingesamt ein Endlosband ist. In die Antriebbskette greifen Kettenräder einer Transmissionswelle ein, die elektromotorisch angetrieben ist, so daß je nach Drehrichtung des Antriebsmotors die Förderbänder mit Trennwand sich in Richtung Beladungsöffnung (Entladen) oder von dieser weg (Beladen) verschieben.

Bei einem ebenfalls bekannten Lastfahrzeug (EP 0 173 936 B1) besteht der Laderaumboden mit Ladefläche in seinem Obertrum aus selbsttragenden Leichtmetall-Strangpreßprofilen, die zu ihrer zugfesten Verbindung an ihren Längsseiten mit formschlüssig ineinandergreifenden Gelenkkupplungsteilen versehen sind und mit ihren quer zur Förderrichtung streifenartig dicht nebeneinander sich erstreckenden Deckflächen insgesamt die Ladefläche bilden. Im Untertrum des Ladebodens befinden sich Zugmittel, z.B. zwei Drahtseile, welche die Strangpreßprofile zugfest miteinander verbinden, so daß insgesamt ein förderbandartiges Gebilde entsteht.

Der Erfindung liegt die Aufgabe zugrunde, in einem Kraftwagen der eingangs genannten Art die Bauhöhe des Laderaumbodens mit in Längsrichtung verschiebbarer Ladefläche auf ein für den Einsatz in Personenkraftwagen oder Kombikraftwagen, geeignetes extrem niedriges Maß zu reduzieren und dabei eine ausreichende Belastbarkeit zu gewährleisten.

Die Aufgabe ist erfindungsgemäß durch die Merkmale des Patentanspruchs 1 gelöst.

Der erfindungsgemäße Kraftwagen hat den Vorteil, daß durch die unmittelbare, gleitende Abstützung des die Ladefläche bildenden Endlosbandes in seiner gesamten Breite auf der Oberund Unterseite des Stützkörpers und durch das Herumführen des Endlosbandes über das gerundete Stützkörperende der Stützkörper mit einer recht kleinen Bauhöhe ausgelegt werden kann, so daß sich in Verbindung mit der Stärke des Endlosbandes eine recht kleine Gesamtbauhöhe des Laderaumbodens ergibt, die unter 30 mm gehalten werden kann, und dennoch der Stützkörper eine große Steifheit und Tragfähigkeit besitzt. Die Konzeption des Bandantriebs als eine unmittelbar an dem Endlosband angreifende Antriebswelle mit einem die Dicke des Stützkörpers nicht übersteigenden Durchmesser schafft dabei die Voraussetzung für eine solche Niedrigbauweise des Laderaumbodens. Der Laderaumboden mit integrierter, am Stützkörper gelagerter Antriebswelle bildet eine komplett vormontierbare Baueinheit, die sich schnell und leicht in den Kraftwagen einbauen läßt und darüber hinaus eine so geringe Bauhöhe hat, daß sich auch noch auf der Rückseite der Rückenlehnen von Hintersitzen unterbringen läßt, die zur Laderaumvergrößerung nach vorn umklappbar sind. Die Baueinheit kann insgesamt kostengünstig gefertigt und vormontiert werden.

Vorteilhafte Ausführungsformen des erfindungsgemäßen Kraftwagens mit zweckmäßigen Ausgestaltungen und Weiterbildungen der Erfindung ergeben sich aus den weiteren Ansprüchen.

Bei einem Personen- oder Kombikraftwagen mit einem Hinteroder Rücksitz mit mindestens einer zur Laderaumvergrößerung nach vorn umklappbaren Rückenlehne, deren Rückenseite als Ladefläche gestaltet und im Umklappzustand bündig mit dem Ladeboden ist, wird gemäß einer vorteilhaften Ausführungsform der Erfindung auf der Rückseite der mindestens einen Rückenlehne ein gleichartig gestaltetes Endlosband, das sich über die Rückenlehnebreite erstreckt und in gleicher Weise angetrieben wird, untergebracht. Dies hat den Vorteil, daß bei Laderaumvergrößerung durch Umklappen der Rückenlehne der zusätzlich geschaffene Laderaum ebenfalls von der von der Heckklappe freigegebenen Beladungsöffnung aus bequem beschickt werden kann. Bei einem Rücksitz mit über die Wagenbreite sich erstreckender Rückenlehne erstreckt sich das Endlosband ebenfalls über die gesamte Wagenbreite. Bei einem Rücksitz mit symmetrisch oder unsymmetrisch geteilter Rückenlehne erhält jede Rückenlehne ein eigenständiges Endlosband mit separatem Bandantrieb.

Gemäß einer vorteilhaften Ausführungsform der Erfindung ist das Endlosband auf beiden Längsseiten des Stützkörpers jeweils von einer im Querschnitt U-förmigen Längsschiene mit Querspiel übergriffen. Durch diese übergreifenden Längsschienen wird das Förderband in Förderrichtung seitlich geführt und ein Abgleiten des Förderbands vom Stützkörper verhindert.

Die Erfindung ist anhand eines in der Zeichnung dargestellten Ausführungsbeispiels im folgenden näher beschrieben. Es zeigen in schematischer Darstellung:
- Fig. 1: eine Seitenansicht des Heckteils eines Kombiwagens,
- Fig. 2: einen vergrößerten Ausschnitt des Heckteils in Fig.1,
- Fig. 3: eine Draufsicht des Laderaumbodens im Heckteil des Kombiwagens in Fig. 1,
- Fig. 4: einen Schnitt längs der Linie IV-IV in Fig. 3,
- Fig. 5: einen Schnitt längs der Linie V-V in Fig. 3.

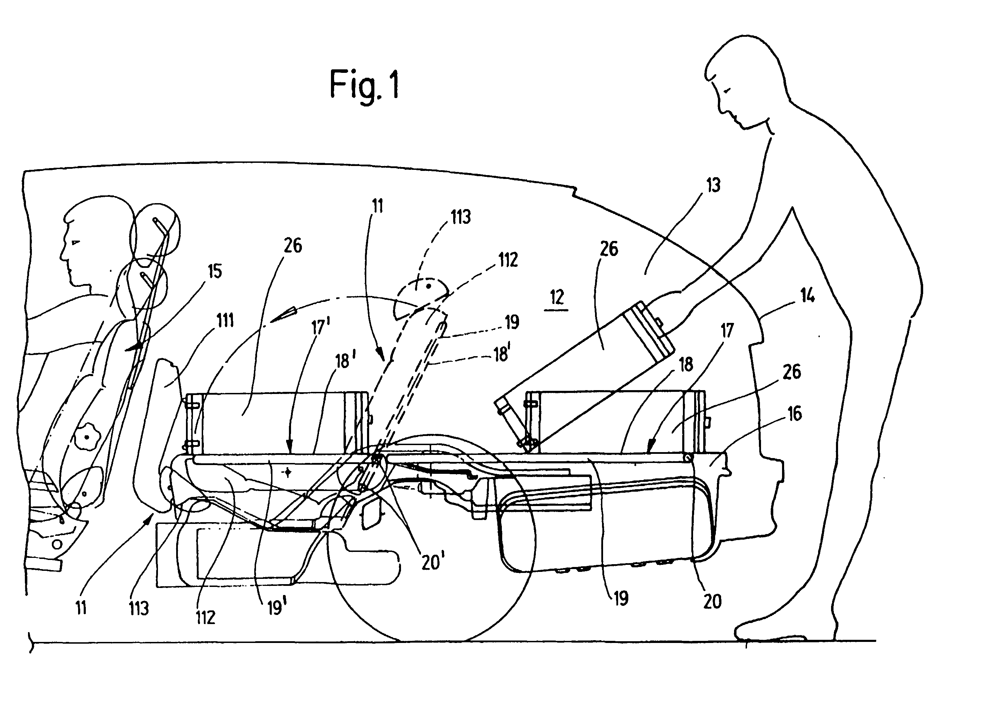

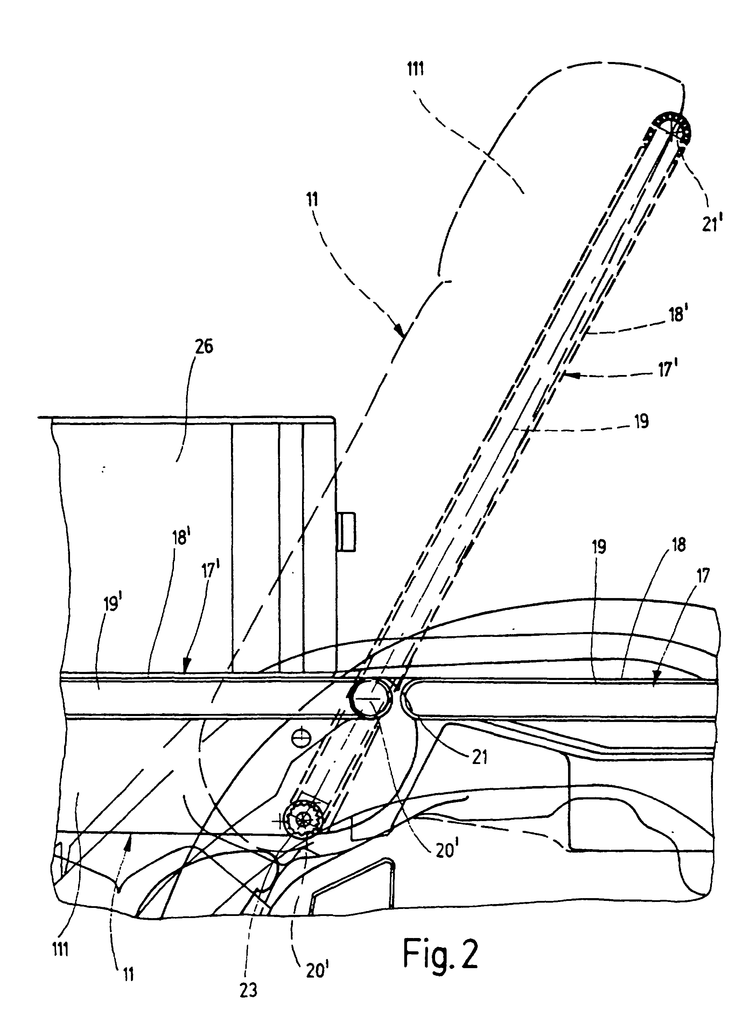

Das in Fig. 1 schematisch und ausschnittweise mit seinem Heckbereich dargestellte Kombikraftwagen, im folgenden kurz Kombiwagen genannt, weist einen hinter einem Hinter- oder Rücksitz 11 angeordneten Gepäck- oder Laderaum 12 auf, der von einer im Heck angeordneten, rückwärtigen Beladungsöffnung 13 aus be- und entladen werden kann. Die Beladungsöffnung 13 ist durch eine Heckklappe 14 verschließbar und wird durch Hochschwenken der Heckklappe 14 freigegeben. Zur Vergrößerung des Aufnahmevolumens des Laderaums 12 sind Sitzkissen 111 und Rückenlehne 112 mit daran festgelegter Kopfstütze 113 des Rücksitzes 11 an einem Sitzgestell des Rücksitzes 11 jeweils für sich schwenk- oder klappbar so gehalten, daß das Sitzkissen 111 gegen die Rückenlehne eines Vordersitzes 15 anschwenkbar und die Rückenlehne 112 um mehr als 90° nach vorn klappbar ist, so daß ihre Rückseite horizontal ausgerichtet ist. Die abgeklappte Stellung des Rücksitzes 11 ist in Fig. 1 und 2 ausgezogen dargestellt, während die Gebrauchsposition des Rücksitzes 11 strichliniert eingezeichnet ist.

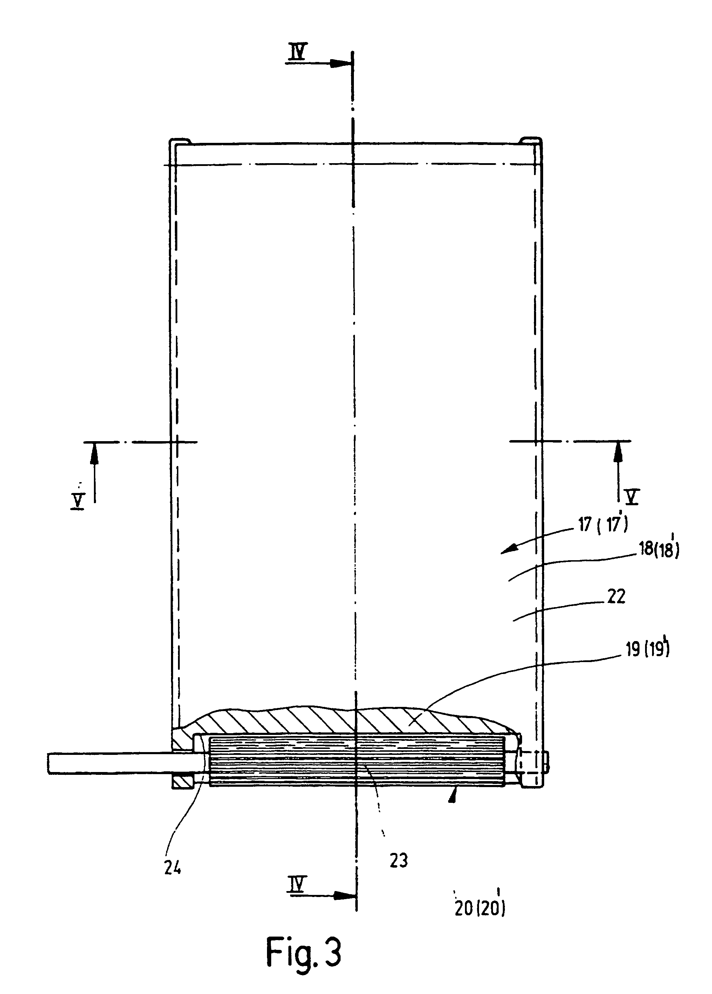

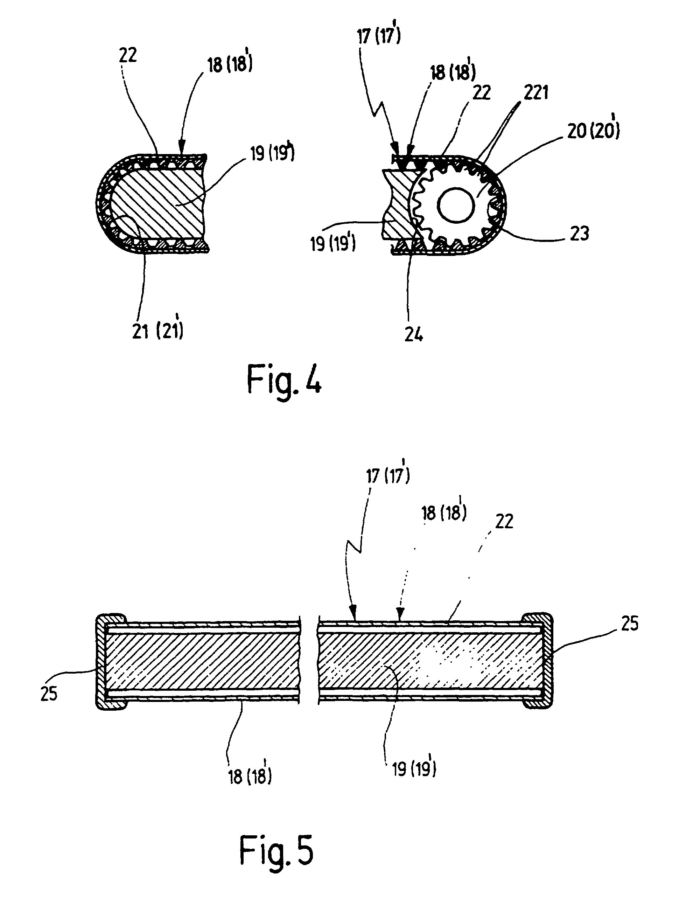

Der Laderaum 12 ist nach unten zum Wagenboden hin durch einen Laderaumboden 16 begrenzt, der eine in Wagenlängsrichtung motorisch verschiebbare Ladefläche 17 zum Auflegen von Gepäck oder Ladegut 26 aufweist. Hierzu ist die Ladefläche 17 von einem über die Laderaumbreite sich erstreckenden Endlosband 18 gebildet, das - wie insbesondere Fig. 5 - zeigt, auf der Oberund Unterseite eines gleich breiten, steifen Stützkörpers 19 gleitend aufliegt und - wie insbesondere Fig. 3 und 4 zeigen - an dem einen Stützkörperende um eine in das Endlosband 18 eingreifende Antriebswelle 20 und an dem anderen Stützkörperende um einen im Querschnitt halbkreisförmigen Gleitbogen 21 herumgeführt ist. Das Endlosband 18 ist auf beiden Längsseiten des Stützkörpers 19 von jeweils einer im Querschnitt U-förmigen Längsschiene 22 mit Querspiel übergriffen, so daß es seitlich nicht vom Stützkörper 19 abgleiten kann. Im Ausführungsbeispiel ist das Endlosband 18 ein Zahnriehmen 22 mit zum Stützkörper 19 weisenden Riemenzähnen 221, und die Antriebswelle 20 weist eine mit den Riemenzähnen 221 korrespondierende Axialverzahnung 23 auf. Die Antriebswelle 20 ist am Stützkörper 19 drehbeweglich gelagert, und der Außendurchmesser der Antriebswelle 20, genauer gesagt der Durchmesser des zwischen den Zähnen der Axialverzahnung 23 liegenden Zahngrunds, ist gleich der Dicke des Stützkörpers 19, so daß das Endlosband 18 von der Oberfläche des Stützkörpers 19 eben in die Antriebswelle 20 einläuft. Der Stützkörper 19 ist aus einem Vollmaterial aus Leichtmetall gefertigt und weist beispielsweise eine Dicke von weniger als 30 mm auf. Das die Antriebswelle 20 aufnehmende Stützkörperende trägt eine kreisbogenabschnittförmige, konkave Einfräsung 24, deren Krümmungsradius um einen Radialspalt größer ist als der Außenradius der Antriebswelle 20. Die Antriebswelle 20 wird motorisch, z.B. von einem Elektromotor, oder manuell angetrieben.

Bei dem in Fig. 1 und 2 dargestellten klappbaren Rücksitz 11 zur Vergrößerung des Laderaums 12 ist ein gleiches Endlosband 18' mit Stützkörper 19' und Antriebswelle 20' in der RückenIehne 112 des Rücksitzes 11 so integriert, daß der eine Teil des Endlosbandes 18' die Rückseite der Rückenlehne 112 bildet. Wird die Rückenlehne 112 in ihre in Fig. 1 und 2 ausgezogen dargestellte Abklappstellung geschwenkt, so liegt das Endlosband 18' in der gleichen Ebene wie das Endlosband 18 und schließt sich unmittelbar an dieses an, so daß bei umgeklappter Rückenlehne 112 sich der Laderaum 12 von der Heckklappe 14 bis hin zu dem Vordersitz 15 erstreckt und insgesamt eine zweiteilige, in Wagenlängsrichtung bewegbare Ladefläche 17 und 17' verfügbar macht, bei der ein Ladegut 26, wie z.B. ein Koffer, von der Beladungsöffnung 13 bis hin zum Vordersitz 15 und umgekehrt transportiert wird. Die Antriebswelle 20' des Endlosbandes 18' hat einen eigenständigen elektrischen Antrieb. In einer vereinfachten Ausführung des Kombiwagens kann auf die Bestückung der Rückenlehne 112 des Rücksitzes 11 mit der beschriebenen Endlosbandanordnung verzichtet und die Endlosbandanordnung auf den Laderaum 12 hinter dem Rücksitz 11 beschränkt werden.

Die Erfindung ist nicht auf einen Kombiwagen beschränkt. Sie kann auch in Personenkraftwagen mit langgestrecktem Kofferraum und kurzem Kofferraumdeckel eingesetzt werden, um in den Kofferraum durch die Kofferraumöffnung hindurch eingesetztes Ladegut in die Tiefe des Kofferraums hinein zu befördern und wieder von dort zurückzuholen. Ebenso findet die Erfindung mit Vorteil Anwendung in Laderäumen von Omnibussen, um auch hier den Zugang zu den unterhalb der Bestuhlung angeordneten Laderäumen, die sich über die gesamte Breite des Omnibusses erstrecken und von einer Längsseite des Omnibusses aus zugänglich sind, zu erleichtern.

## Patentansprüche

1. Personen- oder Kombikraftwagen mit einem Gepäck- oder Laderaum (12), der eine rückwärtige Beladungsöffnung (13) und einen Laderaumboden (16) mit einer in Wagenlängsrichtung, insbesondere motorisch, verschiebbaren Ladefläche (17) zum Auflegen von Gepäck oder Ladegut (26) aufweist, die von einem über die Laderaumbreite sich erstreckenden, auf der Oberseite eines insbesondere gleich breiten, steifen Stützkörpers (19) gleitend aufliegenden und an dem einen Stützkörperende um eine in das Endlosband (18) eingreifende Antriebswelle (20) herumgeführten Endlosband (18) gebildet ist
**dadurch gekennzeichnet,**
**daß** das Endlosband (18) an dem anderen Stützkörperende um einen am Stützkörper (19) ausgebildeten, im Querschnitt halbkreisförmigen Gleitbogen (21) herumgeführt ist und auf der Unterseite des Stützkörpers (19) gleitend anliegt, und daß der Außendurchmesser der Antriebswelle (20) der Dicke des Stützkörpers (19) entspricht.

2. Kraftwagen nach Anspruch 1,
**dadurch gekennzeichnet,**
**daß** ein Hinter- oder Rücksitz (11) mindestens eine nach vorn umklappbare Rückenlehne (112) aufweist, deren Rückseite als Ladefläche (17') dient und im Umklappzustand bündig mit der Oberfläche des Laderaumbodens (16) ist, daß die Ladefläche (17') der mindestens einen Rückenlehne (112) von einem über die Rückenlehnenbreite sich erstreckenden Endlosband (18') gebildet ist, das auf der Ober- und Unterseite eines in der Rückenlehne (112) befestigten, vorzugsweise gleich breiten Stützkörpers (19') gleitend aufliegt und an dem einen Stützkörperende um eine in das Endlosband (18') eingreifende Antriebswelle (20') mit einem der Dicke des Stützkörpers (19') entsprechenden Außendurchmesser und an dem anderen Stützkörperende um einen im Querschnitt halbkreisförmigen Gleitbogen (21') herumgeführt ist.

3. Kraftwagen nach Anspruch 1 oder 2,
**dadurch gekennzeichnet,**
**daß** das Endlosband (18,18') auf beiden Längsseiten des Stützkörpers (19,19') von jeweils einer im Querschnitt U-förmigen Längsschiene (25) mit Querspiel übergriffen ist.

4. Kraftwagen nach einem der Ansprüche 1 - 3,
**dadurch gekennzeichnet,**
**daß** das Endlosband (18;18') ein Zahnriemen (22) mit zum Stützkörper (19) weisenden Riemenzähnen (221) ist und daß die Antriebswelle (20;20') eine mit den Riemenzähnen (221) korrespondierende Axialverzahnung (23) aufweist.

5. Kraftwagen nach einem der Ansprüche 1 - 4,
**dadurch gekennzeichnet,**
**daß** die Antriebswelle (20;20') am Stützkörper (19;19') drehbeweglich gelagert ist.

6. Kraftwagen nach einem der Ansprüche 1 - 5,
**dadurch gekennzeichnet,**
**daß** die Dicke des Stützkörpers (19;19') weniger als 30 mm beträgt.

7. Kraftwagen nach einem der Ansprüche 1 - 6,
**dadurch gekennzeichnet,**
**daß** der Stützkörper (19;19') aus Vollmaterial gefertigt ist.

8. Kraftwagen nach Anspruch 7,
**dadurch gekennzeichnet,**
**daß** der Stützkörper (19;19') an dem die Antriebswelle (20;20') aufnehmenden Stützkörperende eine konkave Einfräsung (24) trägt, deren Krümmungsradius um ein Radialspiel größer ist als der Außenradius der Antriebswelle (20;20').

9. Kraftwagen nach einem der Ansprüche 1 - 8,
**dadurch gekennzeichnet,**
**daß** der halbkreisförmige Gleitbogen (21) einstückig am Stützkörper (19;19') ausgebildet ist.

## Claims

1. A passenger or estate vehicle with a boot or cargo bay (12) which has a rear loading opening (13) and a cargo bay floor (16) with a loading surface (17) which can be moved, in particular by a motor, along the longitudinal axis of the vehicle in order to load luggage or cargo and which takes the form of a continuous conveyor (18) which extends across the width of the cargo bay, lies adjacent to the top of an, in particular equally wide, rigid supporting body (19) in such a manner that it is able to slide and is guided around a drive shaft (20) which engages in the continuous conveyor (18) at one end of the supporting body,
**characterised in that**
at the other end of the supporting body, the continuous conveyor (18) is guided around a curved guide (21) forming part of the supporting body ( 19) which has a semi-circular cross section and lies adjacent to the underside of the supporting body (19) in such a manner that it is able to slide and the outer diameter of the drive shaft (20) corresponds to the thickness of the supporting body (19).

2. A motor vehicle in accordance with claim 1,
**characterised in that**
a rear or back seat (11) has at least one seat back (112) which can be folded forwards, the back of which serves as a loading surface (17') and which, when folded down, lies flush with the surface of the floor of the cargo bay (16), the loading surface (17') of the at least one seat back (112) takes the form of a continuous conveyor (18') which extends over the width of the seat back and lies adjacent to the top and the underside of a supporting body (19'), fixed into the seat back (112) and preferably of equal width, in such a manner that it is able to slide and is guided at one end of the supporting body around a drive shaft (20') which engages in the continuous conveyor (18') which has an external diameter the thickness of the supporting body (19'), and at the other end of the supporting body around a curved guide (21') which a semi-circular cross-section.

3. A motor vehicle in accordance with claim 1 or 2,
**characterised in that**
the continuous conveyor (18, 18') is overlapped on both longitudinal sides of the supporting body (19, 19') by a longitudinal rail (25) with a U-shaped cross-section with lateral play.

4. A motor vehicle in accordance with one of claims 1 to 3,
**characterised in that**
the continuous conveyor (18, 18') is a toothed belt (22) with belt teeth (221) facing the supporting body (19) and the drive shaft (20, 20') has axial toothing (23) which corresponds to the belt teeth (221).

5. A motor vehicle in accordance with one of claims 1 to 4,
**characterised in that**
the drive shaft (20, 20') is mounted on the supporting body (19, 19') in such a manner that it is able to rotate.

6. A motor vehicle in accordance with one of claims 1 to 5,
**characterised in that**
the thickness of the supporting body (19, 19') is less than 30 mm

7. A motor vehicle in accordance with one of claims 1 to 6,
**characterised in that**
the supporting body (19, 19') is manufactured from solid material.

8. A motor vehicle in accordance with claim 7,
**characterised in that**
at the end of the supporting body (19, 19') receiving the drive shaft (20, 20'), the supporting body (19, 19') bears a concave milled recess (24) with a radius of curvature which is one radial play greater than the external radius of the drive shaft (20, 20').

9. A motor vehicle in accordance with one of claims 1 to 8,
**characterised in that**
the semi-circular curved guide (21) is formed in one piece with the supporting body (19).

## Revendications

1. Automobile particulière ou utilitaire comprenant un compartiment à bagages ou à charges (12) qui présente une ouverture de chargement arrière (13) et un fend de compartiment à charges (16) avec une plateforme de chargement (17) pouvant être déplacée, notamment de manière motorisée, dans une direction longitudinale de l'automobile pour déposer des bagages ou des charges (26) et qui est formée par une bande sans fin (18) s'étendant sur la largeur du compartiment à charges, reposant de manière glissante à la face supérieure d'un corps d'appui (19) rigide présentant notamment la même largeur, et guidée à une extrémité du corps d'appui autour d'un arbre d'entraînement (20) intervenant sur la bande sans fin (18),
**caractérisée en ce que** la bande sans fin (18), à l'autre extrémité du corps d'appui, est guidée autour d'un arc de glissement (21) d'une section transversale en demi-cercle formé au niveau du corps d'appui (19) et s'applique de manière glissante à la face inférieure du corps d'appui (19), et **en ce que** le diamètre extérieur de l'arbre d'entraînement (20) correspond à l'épaisseur du corps d'appui (19).

2. Automobile selon la revendication 1,
**caractérisée en ce qu'**un siège arrière (11) présente au moins un dossier (112) rabattable en avant, dont la face arrière sert de plateforme de chargement (17') et, à l'état rabattu, est complémentaire de la surface du fond de compartiment à charges (16), **en ce que** la plateforme de chargement (17') de l'au moins un dossier (112) est formée par une bande sans fin (18') s'étendant sur la largeur de dossier et reposant de manière glissante aux faces supérieure et inférieure d'un corps d'appui (19') fixé dans le dossier (112) et présentant de préférence la même largeur, et étant guidée, à une extrémité du corps d'appui, autour d'un arbre d'entraînement (20') intervenant dans la bande sans fin (18') et présentant un diamètre extérieur correspondant à l'épaisseur du corps d'appui (19'), et à l'autre extrémité du corps d'appui autour d'un arc de glissement (21') d'une section transversale en demi-cercle.

3. Automobile selon la revendication 1 ou 2,
**caractérisée en ce que** la bande sans fin (18, 18'), aux deux côtés longitudinaux du corps d'appui (19, 19'), est recouverte avec jeu transversal par respectivement un rail longitudinal (25) d'une section transversale en U.

4. Automobile selon l'une quelconque des revendications 1 - 3,
**caractérisée en ce que** la bande sans fin (18 ; 18') est une courroie dentée (22) avec des dents de courroie (221) orientées vers le corps d'appui (19), et **en ce que** l'arbre d'entraînement (20 ; 20') présente un endentement axial (23) correspondant aux dents de courroie (221).

5. Automobile selon l'une quelconque des revendications 1 - 4,
**caractérisée en ce que** l'arbre d'entraînement (20 ; 20') est logé au niveau du corps d'appui (19 ; 19') de manière libre en rotation.

6. Automobile selon l'une quelconque des revendications 1 - 5,
**caractérisée en ce que** l'épaisseur du corps d'appui (19 ; 19') est inférieure à 30 mm.

7. Automobile selon l'une quelconque des revendications 1 - 6,
**caractérisée en ce que** le corps d'appui (19 ; 19') est réalisé à partir d'un matériau massif.

8. Automobile selon la revendication 7,
**caractérisée en ce que** le corps d'appui (19 ; 19'), au niveau de l'extrémité de corps d'appui recevant l'arbre d'entraînement (20 ; 20'), comporte un fraisage concave (24) dont le rayon de courbure est plus grand d'un jeu radial que le rayon extérieur de l'arbre d'entraînement (20 ; 21').

9. Automobile selon l'une quelconque des revendications 1 - 8,
**caractérisée en ce que** l'arc de glissement (21) en forme de demi-cercle est formé d'un seul tenant avec le corps d'appui (19 ; 19').
